(19)

Europäisches
Patentamt

European
Patent Office

Office européen
des brevets

(11)  **EP 4 525 085 A1**

(12)  **EUROPEAN PATENT APPLICATION**

(43) Date of publication:
**19.03.2025 Bulletin 2025/12**

(21) Application number: **24200319.2**

(22) Date of filing: **13.09.2024**

(51) International Patent Classification (IPC):
*H01M 4/36* (2006.01)     *H01M 4/62* (2006.01)
*H01M 10/04* (2006.01)     *H01M 10/0587* (2010.01)

(52) Cooperative Patent Classification (CPC):
**H01M 10/0431; H01M 4/366; H01M 4/62;
H01M 4/628;** H01M 10/0587

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023  CN 202311201240
26.07.2024  PCT/CN2024/107879**

(71) Applicants:
• **Huizhou EVE Power Co., Ltd
Tonghu Town, Zhongkai High-tech District
Huizhou, Guangdong 516039 (CN)**
• **Eve Power Co., Ltd.
Jingmen, Hubei 448000 (CN)**

(72) Inventors:
• **CHENG, Mengsi
Huizhou, Guangdong, 516039 (CN)**
• **WANG, Chao
Huizhou, Guangdong, 516039 (CN)**
• **ZENG, Hanmin
Huizhou, Guangdong, 516039 (CN)**
• **HE, Wei
Huizhou, Guangdong, 516039 (CN)**
• **LIU, Jincheng
Huizhou, Guangdong, 516039 (CN)**

(74) Representative: **Murgitroyd & Company
165-169 Scotland Street
Glasgow G5 8PL (GB)**

(54)  **CYLINDRICAL BATTERY AND BATTERY PACK**

(57)    Provided are a cylindrical battery (10) and a battery pack (1). The cylindrical battery (10) includes a housing (101), an electrode assembly (102), and a first insulating layer (103). The housing (101) includes a receiving cavity (1014). The electrode assembly (102) is disposed within the receiving cavity (1014). The electrode assembly (102) includes a positive electrode sheet, a separator, and a negative electrode sheet (1021). The positive electrode sheet has a positive electrode tab (1024), the negative electrode sheet (1021) has a negative electrode tab (1022), and the positive electrode tab (1024) and the negative electrode tab (1022) are disposed at two ends of the electrode assembly (102), respectively. The first insulating layer (103) is provided on a surface of the negative electrode sheet (1021) toward the separator and is disposed away from the negative electrode tab (1022).

FIG. 1

EP 4 525 085 A1

## EP 4 525 085 A1

**Description**

TECHNICAL FIELD

The present disclosure relates to the field of battery technology, for example to a cylindrical battery and a battery pack.

BACKGROUND

In the long-term cycle of cylindrical batteries, the negative electrode sheets inside the cylindrical batteries will expand and extend, resulting in the separators inside the cylindrical batteries being punctured by the negative electrode sheets.

SUMMARY

In a first aspect, the present disclosure provides a cylindrical battery. The cylindrical battery includes a housing, an electrode assembly, and a first insulating layer. The housing includes a receiving cavity. The electrode assembly is disposed within the receiving cavity. The electrode assembly includes a positive electrode sheet, a separator, and a negative electrode sheet which are stacked and wound. A positive electrode tab of the positive electrode sheet and a negative electrode tab of the negative electrode sheet are disposed at two ends of the electrode assembly, respectively. The first insulating layer is provided on a surface of the negative electrode sheet toward the separator and is disposed at an end, away from the negative electrode tab, of the surface.

In a second aspect, the present disclosure provides a battery pack. The battery pack includes multiple cylindrical batteries described above, the multiple cylindrical batteries being connected in series or in parallel.

BRIEF DESCRIPTION OF THE DRAWINGS

FIG. 1 is an exploded view of a cylindrical battery provided by some embodiments of the present disclosure.
FIG. 2 is a front view of a negative electrode sheet with a first insulating layer in an unfolded state provided by some embodiments of the present disclosure.
FIG. 3 is a top view of a negative electrode sheet of a first type with a first insulating layer provided by some embodiments of the present disclosure.
FIG. 4 is a top view of a negative electrode sheet of a second type with a first insulating layer provided by some embodiments of the present disclosure.
FIG. 5 is a front view of a negative electrode sheet of a further type with a first insulating layer and in an unfolded state provided by some embodiments of the present disclosure.
FIG. 6 is a top view of a negative electrode sheet of a third type with a first insulating layer provided by some embodiments of the present disclosure.
FIG. 7 is a top view of a negative electrode sheet of a fourth type with a first insulating layer provided by some embodiments of the present disclosure.
FIG. 8 is a top view of a negative electrode sheet of a fifth type with a first insulating layer provided by some embodiments of the present disclosure.
FIG. 9 is a top view of a negative electrode sheet of a sixth type with a first insulating layer provided by some embodiments of the present disclosure.
FIG. 10 is a top view of a negative electrode sheet of a seventh type with a first insulating layer provided by some embodiments of the present disclosure.
FIG. 11 is a top view of a negative electrode sheet of an eighth type with a first insulating layer provided by some embodiments of the present disclosure.
FIG. 12 is a top view of a negative electrode sheet of a ninth type with a first insulating layer provided by some embodiments of the present disclosure.
FIG. 13 is a top view of a negative electrode sheet of a tenth type with a first insulating layer provided by some embodiments of the present disclosure.
FIG. 14 is a top view of a negative electrode sheet with a first insulating layer and a second insulating layer provided by some embodiments of the present disclosure.
FIG. 15 is a diagram showing the structure of a battery pack provided by some embodiments of the present disclosure.

Reference numerals are as follows.
Battery pack 1; Cylindrical battery 10; Housing 101; Upper cover 1011; Cylindrical body 1012; Lower cover 1013; Receiving cavity 1014; Electrode assembly 102; Negative electrode sheet 1021; Negative electrode tab 1022; Material area 1023; Positive electrode tab 1024; First insulating layer 103; First sub-insulating layer 1031; Second insulating layer 104; Case 20; Case cover 201; Case body 202.

DETAILED DESCRIPTION

After a separator in a cylindrical battery is punctured, a material area on a side of a negative electrode sheet away from a negative electrode tab is in direct contact with a positive electrode tab, resulting in a short circuit. At present, how to avoid the short circuit caused by the contact between the material area on the side of the negative electrode sheet away from the negative electrode tab and the positive electrode tab after the separator is punctured needs to be solved.

Embodiments of the present disclosure provide a cylindrical battery and a battery pack for avoiding a short circuit caused by the contact between the material area on the side of the negative electrode sheet away from the negative electrode tab and the positive electrode tab after the separator is punctured.

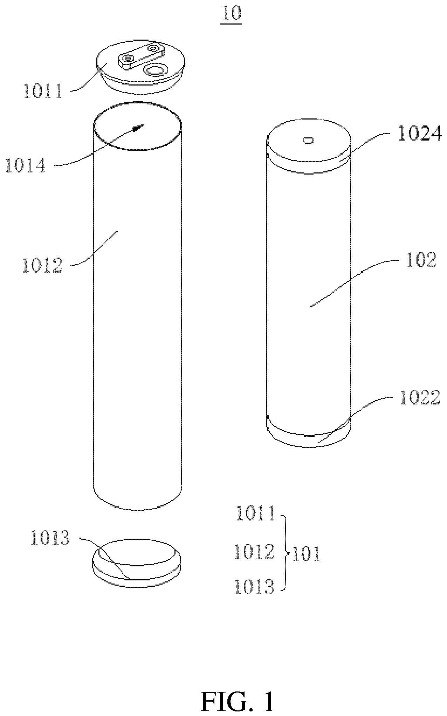

Referring to FIG. 1, FIG. 1 is an exploded view of a cylindrical battery 10 provided by some embodiments of the present disclosure. Embodiments of the present disclosure provide a cylindrical battery 10, the cylindrical battery 10 including a housing 101, an electrode assembly 102, and a first insulating layer 103. The housing 101 has a receiving cavity 1014. The electrode assembly 102 is disposed within the receiving cavity 1014. The electrode assembly 102 includes a positive electrode sheet, a separator, and a negative electrode sheet 1021 which are stacked and wound. A positive electrode tab 1024 of the positive electrode sheet and a negative electrode tab 1022 of the negative electrode sheet 1021 are disposed at two ends of the electrode assembly 102, respectively. The first insulating layer 103 is provided on a surface of the negative electrode sheet 1021 toward the separator, and the first insulating layer 103 is disposed at an end of the surface away from the negative electrode tab 1022.

The negative electrode sheet 1021 includes a current collector and an active substance layer provided on the current collector, and the area where the active substance layer is located is a material area 1023. A surface of the active substance layer away from the current collector is the surface of the negative electrode sheet 1021 toward the separator. A blank area without the active substance layer is disposed at an end of the surface of the current collector in the width direction of the current collector, and a portion of the current collector in the blank area serves as the negative electrode tab 1022. The first insulating layer 103 is provided on the surface of the active substance layer away from the current collector and is disposed at an end of the surface away from the negative electrode tab 1022.

The first insulating layer 103 is a layer of material having insulating properties, which may be provided on the negative electrode sheet 1021 by coating, or may be provided on the negative electrode sheet 1021 by adhesion. The first insulating layer 103 may include 20% to 40% ceramic, 15% to 60% binder, and 5% to 20% organic solvent by weight. The ceramic includes, but is not limited to, aluminum oxide, boehmite, and zirconium oxide. The binder includes, but is not limited to, polyvinylidene difluoride, polytetrafluoroethylene, and sodium carboxymethyl cellulose. The organic solvent includes, but is not limited to, i-methylpyrrolidone, polyethylene glycol diacrylate, polyethylene glycol dimethacrylate, and a highly insulating adhesive resin. The highly insulating adhesive resin may be a polyvinylidene difluoride-based binder. The polyvinylidene difluoride-based binder is a binder resin formed by preparing a copolymer with organic monomers such as butyl acrylate, acrylonitrile, vinyl acetate, etc., and then dispersing the copolymer with an inorganic filler in an organic solvent. The inorganic filler includes, but is not limited to, potassium persulfate, sodium persulfate, ammonium persulfate, and the like.

For example, the first insulating layer 103 may be made of any one or more of the insulating adhesives in the table below.

Table 1. Information Description Table of Some Insulating Adhesives

| Serial number | Name of insulating adhesive | Related information |
|---|---|---|
| 1 | Insulating adhesive A | Aluminium oxide, polyvinylidene difluoride, and n-methylpyrrolidone are mixed in a mass ratio of 30:55:15, and an insulating layer slurry with insulating properties is obtained after uniform mixing. |
| 2 | Insulating adhesive B | Boehmite, polyvinylidene difluoride, and n-methylpyrrolidone are mixed in a mass ratio of 30:55:15, and an insulating layer slurry with insulating properties is obtained after uniform mixing. |

(continued)

| Serial number | Name of insulating adhesive | Related information |
|---|---|---|
| 3 | Insulating adhesive C | Aluminium oxide, boehmite, polyvinylidene difluoride, and n-methylpyrrolidone are mixed in a mass ratio of 10:20:55:15, and an insulating layer slurry with insulating properties is obtained after uniform mixing. |

In the embodiments, the material area 1023 is provided on the surface of the negative electrode sheet 1021 toward the separator, and the first insulating layer 103 is provided on the surface of a side of the material area 1023 away from the negative electrode tab 1022. In this manner, during the use of the cylindrical battery 10, in a case where the negative electrode sheet 1021 expands and extends, which causes the negative electrode sheet 1021 to puncture the separator, and extend toward the positive electrode tab 1024, the first insulating layer 103 can separate (an edge of) the material area 1023, which is on a side of the negative electrode sheet 1021 away from the negative electrode tab 1022, from the positive electrode tab 1024, thereby preventing the material area 1023 on the side of the negative electrode sheet 1021 away from the negative electrode tab 1022 from directly contacting the positive electrode tab 1024, thereby avoiding a short circuit caused by direct contact between the material area 1023 on the side of the negative electrode sheet 1021 away from the negative electrode tab 1022 and the positive electrode tab 1024, and improving the safety and stability of the battery.

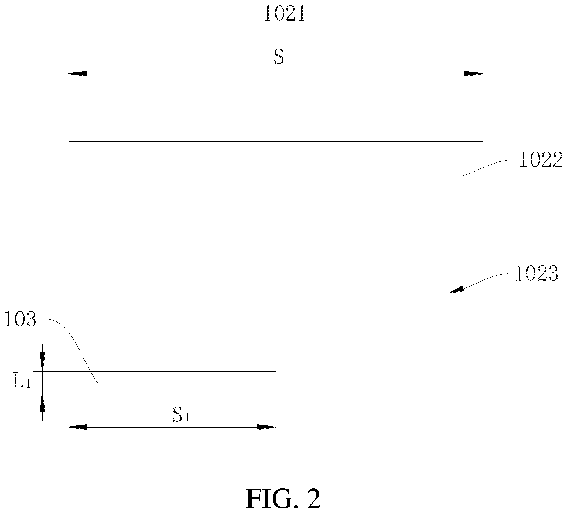

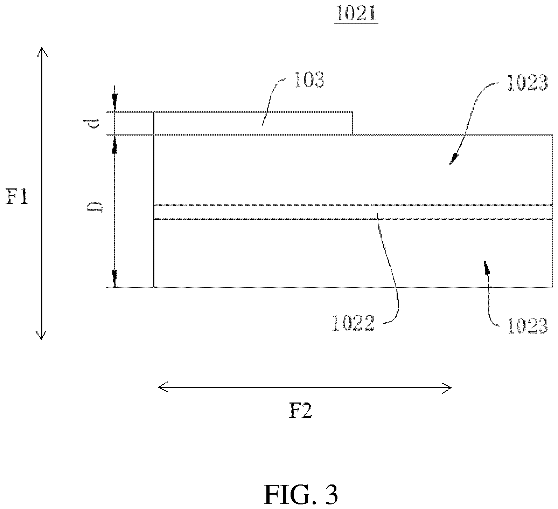

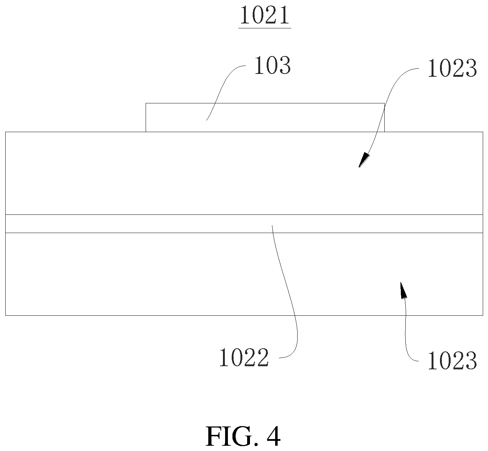

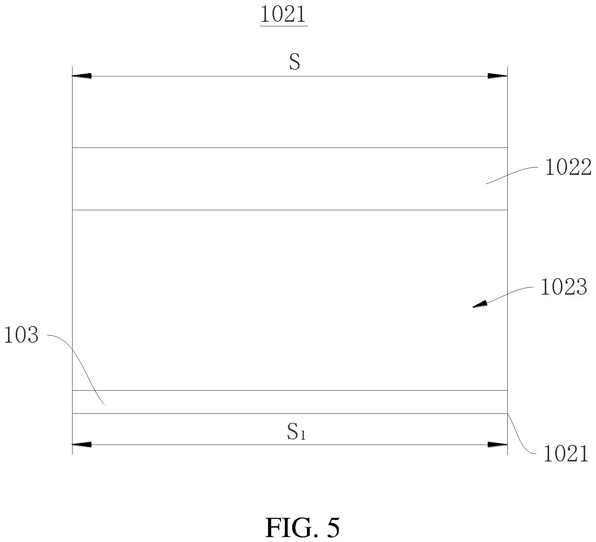

The first insulating layer 103 has a dimension $S_1$ in the length direction of the negative electrode sheet 1021, the length of the negative electrode sheet 1021 is S, and $S_1 \leq S$. When $S_1 < S$, the first insulating layer 103 may be provided at any position along the length of the negative electrode sheet 1021. In this manner, the first insulating layer 103 covers part of the edge of the negative electrode sheet 1021 on a side away from the negative electrode tab 1022, thereby separating the positive electrode tab 1024 from a portion of the edge of the material area 1023 on the side of the negative electrode sheet 1021 away from the negative electrode tab 1022. As shown in FIGS. 2 to 4, FIG. 2 is a front view of a negative electrode sheet 1021 with a first insulating layer 103 in an unfolded state provided by some embodiments of the present disclosure, FIG. 3 is a top view of a negative electrode sheet 1021 of a first type with a first insulating layer 103 provided by some embodiments of the present disclosure, and FIG. 4 is a top view of a negative electrode sheet 1021 of a second type with a first insulating layer 103 provided by some embodiments of the present disclosure. In FIGS. 2 and 3, the first insulating layer 103 is provided from one end of the negative electrode sheet 1021 in the length direction F2; in FIG. 4, the first insulating layer 103 is provided from a position that is in the middle of the negative electrode sheet 1021 in the length direction. When $S_1 = S$, as shown in FIG. 5, FIG. 5 is a front view of a negative electrode sheet 1021 of a further type with a first insulating layer 103 and in an unfolded state provided by some embodiments of the present disclosure, and in this case, the first insulating layer 103 covers all of the edge of the negative electrode sheet 1021 on the side away from the negative electrode tab 1022, thereby separating the positive electrode tab 1024 from all of the edge of the material area 1023 on the side of the negative electrode sheet 1021 away from the negative electrode tab 1022.

The dimension of the first insulating layer 103 in the width direction of the negative electrode sheet 1021 is $L_1$, and $L_1$ satisfies $0.1 \, mm \leq L_1 \leq 50 \, mm$. When $L_1$ is less than 0.1 mm, the covered area of the first insulating layer 103 is too small, and a short circuit may not be completely avoided in the process of expansion and extension of the negative electrode sheet 1021; when $L_1$ is greater than 50 mm, the covered area of the first insulating layer 103 exceeds the Overhang area too much, which is unfavorable to de-embedding lithium.

In some embodiments, the first insulating layer 103 has a dimension d in the thickness direction F1 of the negative electrode sheet 1021, the dimension d satisfying

$$d \leq \frac{\frac{S}{\pi} - 2r - (2n-1)nD}{n(n+1)} - a - 2b \qquad (1)$$

where $S$ is the length (mm) of the negative electrode sheet 1021;
$r$ is the radius (mm) of a winding needle used for winding to form the electrode assembly;
$a$ is the thickness (mm) of the positive electrode sheet;
$b$ is the thickness (mm) of the separator;
$D$ is the thickness (mm) of the negative electrode sheet 1021;
$n$ is the number of turns that the negative electrode sheet is wound.

The formula for calculating the length $S_2$ of the negative electrode sheet 1021 not provided with the first insulating layer 103 is $S_2 = [(a+2b)(n+1)n+(2n-1)nD+2r]\pi$. Based on this formula, the formula for calculating the length $S$ of the negative electrode sheet 1021 provided with the first insulating layer 103 is known to be $S = [(d+a+2b)(n+1)n+(2n-1)nD+2r]$

$\pi$. A transformation of this formula yields: $d = \dfrac{\frac{S}{\pi} - 2r - (2n-1)nD}{n(n+1)} - a - 2b$ , which is the maximum value of d that satisfies the requirements such as the assembly dimensions of the electrode assembly. From this, Formula (1) is obtained. The maximum value of the dimension d of the first insulating layer 103 in the thickness direction of the negative electrode sheet 1021 can then be obtained based on the set length of the negative electrode sheet 1021. A dimension d within this range can realize automatic insertion of the electrode assembly into the housing, and a gap for expansion of the electrode sheet and a space for injection of electrolyte in accordance with the design requirements exist between the electrode assembly 102 and the housing 101 after the electrode assembly enters the housing.

In some embodiments, the dimension d of the first insulating layer 103 in the thickness direction of the negative electrode sheet 1021 further satisfies

$$90\% \le \frac{\pi\left[r + n(d+a+2b) + \frac{2n-1}{2}D\right]^2}{\pi R^2} \le 98\% \qquad (2)$$

where A is the radius (mm) of the housing 101.

Based on Formula (1), a more optimal range of dimension d can be obtained according to the group margin formula, i.e., Formula (2). The value of dimension d in this range can result in a higher energy density on the basis of the technical effect corresponding to Formula (1).

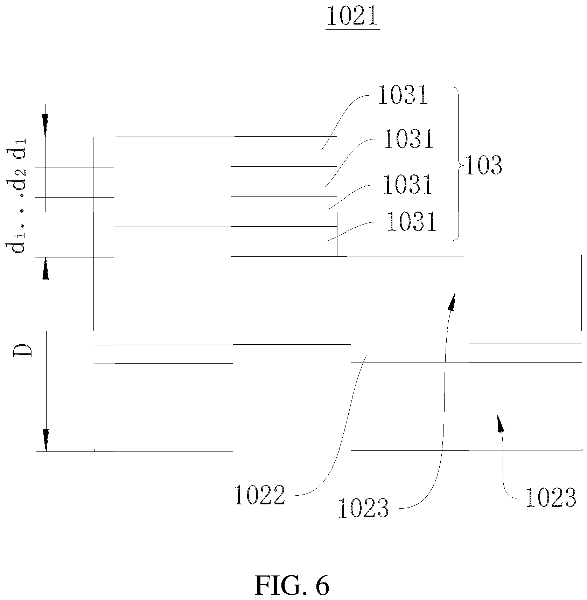

Referring to FIG. 6, FIG. 6 is a top view of a negative electrode sheet 1021 of a third type with a first insulating layer 103 provided by some embodiments of the present disclosure. In some embodiments, the first insulating layer 103 includes multiple first sub-insulating layers 1031, the first sub-insulating layers 1031 are provided on the same side of the negative electrode sheet 1021, and the first sub-insulating layers 1031 are stacked sequentially along the thickness direction of the negative electrode sheet 1021.

Along a direction approaching the negative electrode sheet 1021, the first sub-insulating layers 1031 have dimensions (i.e., thicknesses) in the thickness direction of the negative electrode sheet 1021 in the order of di, $d_2$, ..., di, where i is a natural number and $i \ge 2$, and $\sum d_i = d$. It is to be understood that, based on the thickness d of the first insulating layer 103, the number of the first sub-insulating layers 1031 may be designed, e.g., i = 2, i = 3, i = 4 or i = 5, such that the value of $\sum d_i$ satisfies the aforementioned Formula (1) or Formula (2).

In the embodiments shown in FIG. 6, the multiple first sub-insulating layers 1031 may be provided on the same side of the negative pole sheet 1021 by coating. As a result, it can be advantageous to control the thickness of the first insulating layer 103 and also increase the insulating property of the first insulating layer 103, thereby making the internal resistance between the material area 1023 on the side of the negative electrode sheet 1021 away from the negative electrode tab 1022 and the positive electrode tab 1024 larger, and enhancing the insulating property between the material area 1023 on the side of the negative electrode sheet 1021 away from the negative electrode tab 1022 and the positive electrode tab 1024.

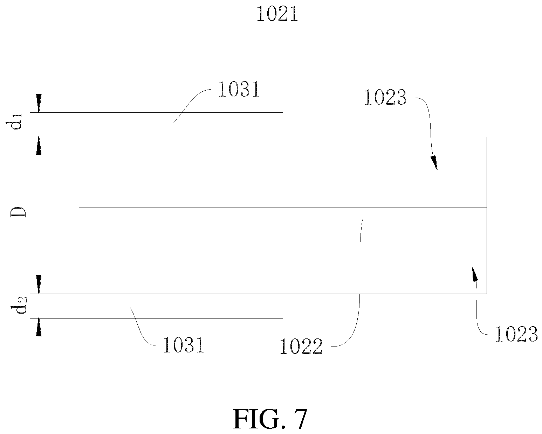

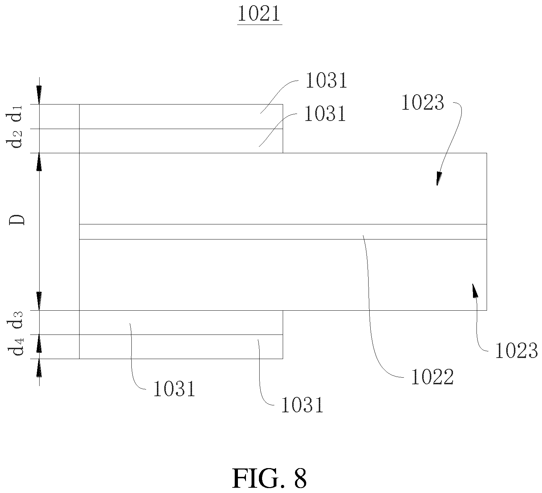

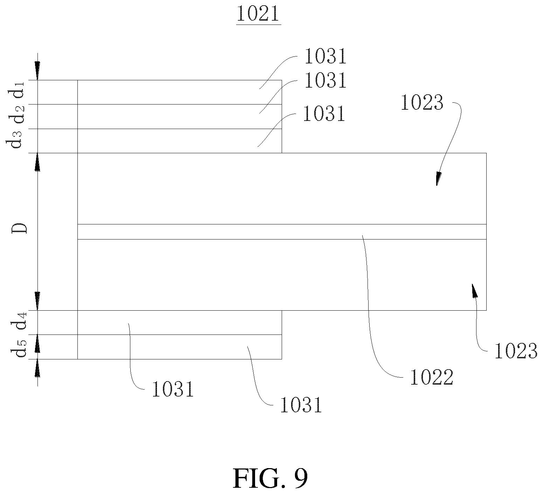

Referring to FIGS. 7 to 9, FIG. 7 is a top view of a negative electrode sheet 1021 of a fourth type with a first insulating layer 103 provided by some embodiments of the present disclosure, FIG. 8 is a top view of a negative electrode sheet 1021 of a fifth type with a first insulating layer 103 provided by some embodiments of the present disclosure, and FIG. 9 is a top view of a negative electrode sheet 1021 of a sixth type with a first insulating layer 103 provided by some embodiments of the present disclosure. In some embodiments, the first insulating layer 103 includes multiple first sub-insulating layers 1031, and the negative electrode sheet 1021 has a first side and a second side which are opposite each other. Part of the first sub-insulating layers 1031 are provided on the first side, and the remaining of the first sub-insulating layers 1031 are provided on the second side. The first sub-insulating layers 1031 disposed on the same side of the negative electrode sheet 1021 are sequentially stacked along the thickness direction of the negative electrode sheet 1021.

Part of the first sub-insulating layers 1031 are provided on the first side of the negative electrode sheet 1021, and other part of the first sub-insulating layers 1031 are provided on the second side of the negative electrode sheet 1021, as shown in FIGS. 7, 8, and 9. In FIG. 7, one first sub-insulating layer 1031 is provided on each side of the negative electrode sheet 1021, and the two first sub-insulating layers 1031 have dimensions, namely $d_1$ and $d_2$, in the thickness direction of the negative electrode sheet 1021, where $d_1 + d_2 = d$. In FIG. 8, two first sub-insulating layer 1031 are provided on each side of the negative electrode sheet 1021. From the first side to the second side of the negative electrode sheet 1021, the dimensions of the first sub-insulating layers 1031 in the thickness direction of the negative electrode sheet 1021 are $d_1$, $d_2$, $d_3$ and $d_4$, where $d_1 + d_2 + d_3 + d_4 = d$. In FIG. 9, three first sub-insulating layers 1031 are provided on one side of the negative electrode sheet 1021, and two first sub-insulating layers 1031 are provided on the other side of the negative electrode sheet 1021. From the first side to the second side of the negative electrode sheet 1021, the dimensions of the first sub-insulating layers 1031 in the thickness direction of the negative electrode sheet 1021 are $d_1$, $d_2$, $d_3$, $d_4$ and $d_5$, where $d_1 + d_2 + d_3 + d_4 + d_5 = d$.

The first sub-insulating layers 1031 are provided on both sides of the negative electrode sheet 1021, and thereby the first insulating layers 103 separate both surfaces of the negative electrode sheet 1021 away from the negative electrode tab 1022 in the thickness direction of the negative electrode sheet 1021 from the positive electrode tab 1024. In this manner, when the separator has been punctured, the material area 1023 on both surfaces of the negative electrode sheet 1021 away from the negative electrode tab 1022 in the thickness direction of the negative electrode sheet 1021 is prevented from directly contacting the positive electrode tab 1024.

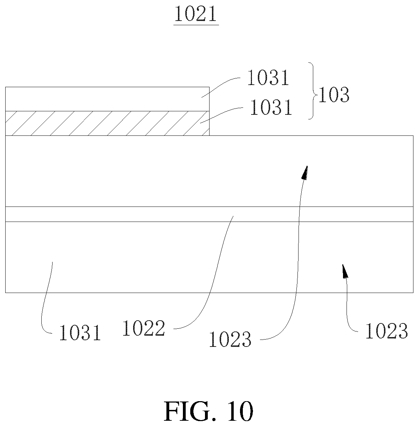

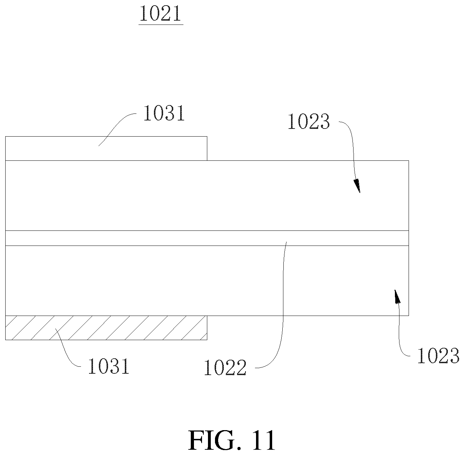

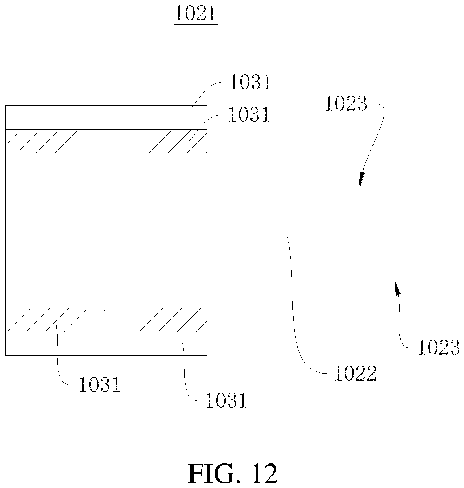

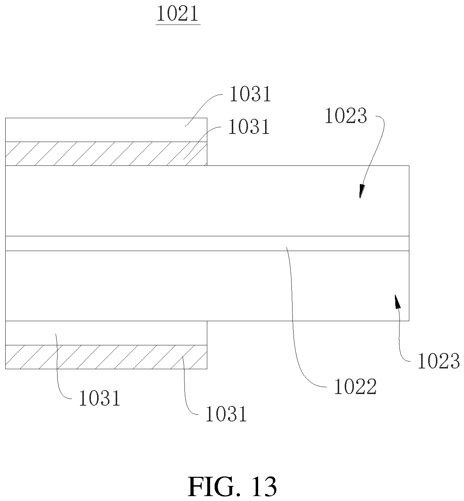

When there are multiple first sub-insulating layers 1031, the first sub-insulating layers 1031 may be made of the same insulating material or may be made of different insulating materials. As shown in FIGS. 10 to 13, FIG. 10 is a top view of a negative electrode sheet 1021 of a seventh type with a first insulating layer 103 provided by some embodiments of the present disclosure, FIG. 11 is a top view of a negative electrode sheet 1021 of an eighth type with a first insulating layer 103 provided by some embodiments of the present disclosure, FIG. 12 is a top view of a negative electrode sheet 1021 of a ninth type with a first insulating layer 103 provided by some embodiments of the present disclosure, and FIG. 13 is a top view of a negative electrode sheet 1021 of a tenth type with a first insulating layer 103 provided by some embodiments of the present disclosure. In FIG. 10, two first sub-insulating layers 1031 are provided on one side of the negative electrode sheet 1021, and the two first sub-insulating layers 1031 have different insulating materials. In FIG. 11, one first sub-insulating layer 1031 is provided on each of two sides of the negative electrode sheet 1021, and the insulating materials of the first sub-insulating layers 1031 on the two sides of the negative electrode sheet 1021 are different. In FIG. 12, first sub-insulating layers 1031 on two sides of the negative electrode sheet 1021 may be provided in mirror symmetry with respect to the negative electrode sheet 1021; among these first sub-insulating layers 1031 on the two sides, one first sub-insulating layer 1031 directly coated on the negative electrode sheet 1021 utilizes one type of insulating material, and the other first sub-insulating layer 1031 coated on this first sub-insulating layer 1031 utilizes another type of insulating material. In FIG. 13, two first sub-insulating layers 1031 are provided on each of two sides of the negative electrode sheet 1021. For example, two first sub-insulating layers 1031 are provided on each of the two sides of the negative electrode sheet 1021. One first sub-insulating layer 1031 is directly coated on one side of the negative electrode sheet 1021 and adopts the first insulating material, and the other first sub-insulating layer 1031 is coated on this first sub-insulating layer 1031 and adopts the second insulating material; one first sub-insulating layer 1031 is directly coated on the other side of the negative electrode sheet 1021 and adopts the second insulating material, and another first sub-insulating layer 1031 is coated on this first sub-insulating layer 1031 and adopts the first insulating material.

The use of different insulating materials in multiple first sub-insulating layers 1031 allows the first insulating layer 103 to obtain the comprehensive performance of the different insulating materials, which facilitates the enhancement of the insulating property between the material area 1023 on the side of the negative electrode sheet 1021 away from the negative electrode tab 1022 and the positive electrode tab 1024.

According to the aforementioned information description table of some insulating adhesives, the following four groups of negative electrode sheets 1021 are made for control experiments with respect to the setting of the first insulating layer 103.

Group I: The negative electrode sheet 1021 is not provided with the first insulating layer 103.

Group II: The insulating adhesive A is uniformly coated on a portion of the material area which is on one side of the negative electrode sheet 1021 and faces away from the negative electrode tab 1022 to form a first insulating layer 103. The first insulating layer 103 includes multiple first sub-insulating layers 1031, the average of the thicknesses $d_1$ to $d_i$ of the first sub-insulating layers 1031 is 5.7 $\mu$m, and the first sub-insulating layers 1031 each have a length $S_1$ that is equal to the length $S$ of the negative electrode sheet.

Group III: The insulating adhesive A is uniformly coated on portions of the material area which are on two sides of the negative electrode sheet 1021 and face away from the negative electrode tab 1022 to form first insulating layers 103. The first sub-insulating layers 1031 coated on both sides of the negative electrode sheet 1021 have thicknesses of 5.5 $\mu$m and 5.7 $\mu$m, and each have a length $S_1$ that is equal to the length $S$ of the negative electrode sheet.

Group IV: The insulating adhesives A and B are uniformly coated on portions of the material area which are on both sides of the negative electrode sheet 1021 and face away from the negative electrode tab 1022 to form first insulating layers 103. The first sub-insulating layers 1031 coated on both sides of the negative electrode sheet 1021 have thicknesses of 5.7 $\mu$m and 9.5 $\mu$m, and each have a length $S_1$ that is equal to the length S of the negative electrode sheet.

For these four groups of negative electrode sheets 1021, the internal resistance of a side of the negative electrode sheet 1021 away from the negative electrode tab 1022 is detected using the four-probe method to obtain the following internal resistance data table.

Table 2. Measurement Table of the Internal Resistances of the Four Groups of Negative Electrode Sheets 1021

| Experimental group | Internal resistance/m$\Omega$ |
|---|---|
| Group I | 11.3 |
| Group II | 12.4 |

(continued)

| Experimental group | Internal resistance/$m\Omega$ |
| --- | --- |
| Group III | 13.7 |
| Group IV | 16.4 |

As can be seen from Table 2, in cases where the first insulating layer 103 is thicker, and the insulating adhesive is coated on each side of the negative electrode sheet 1021, the internal resistance of the corresponding negative electrode sheet 1021 is higher.

In some embodiments, in a case where there are multiple first sub-insulating layers 1031, from one side to the other side of the negative electrode sheet 1021, the dimensions of the first sub-insulating layers 1031 in the thickness direction of the negative electrode sheet 1021 are di, $d_2$, ..., di, where i is a natural number and $i \geq 2$, and $0.15 < d_1 : d_i \leq 1$.

$d_1 : d_i$ is limited, thereby ensuring that the thicknesses of the first sub-insulating layers 1031 do not differ much from each other, so that the thickness distribution of the first sub-insulating layers 1031 is as uniform as possible to improve the bonding stability between two adjacent first sub-insulating layers 1031. Optionally, $0.2 < d_1 : d_i \leq 0.75$.

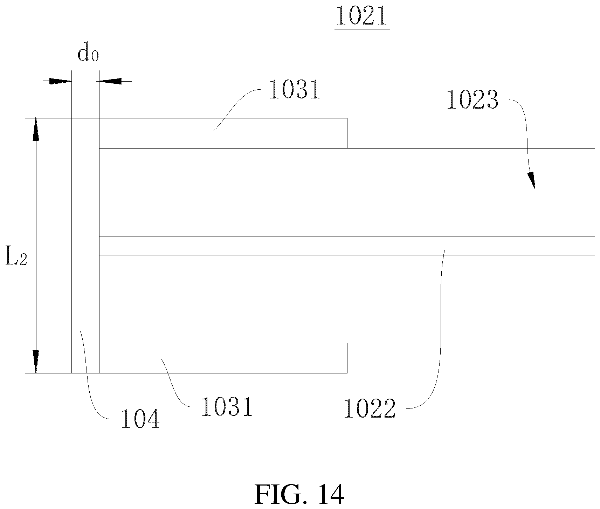

Referring to FIG. 14, FIG. 14 is a top view of a negative electrode sheet 1021 with a first insulating layer 103 and a second insulating layer 104 provided by some embodiments of the present disclosure. In some embodiments, an end face in the length direction of the negative electrode sheet 1021 is a first end face, the first end face being disposed at an outer periphery of the electrode assembly 102, and the second insulating layer 104 is provided on the first end face.

The first end face of the negative electrode sheet 1021 is located at the outer periphery of the electrode assembly 102, and has a large amount of deformation when the negative electrode sheet 1021 expands and extends, causing puncturing the separator and posing a risk of a short circuit. Therefore, the second insulating layer 104 is provided at the first end face, thereby separating the first end face from the positive electrode sheet when the first end face punctures the separator and extends toward the positive electrode sheet, and thus enhancing the stability of the cylindrical battery 10.

Like the first insulating layer 103, the second insulating layer 104 is also a material layer having insulating properties. The insulating materials of the first insulating layer 103 and the second insulating layer 104 have a variety of choices, and the specific raw materials thereof are not limited, and adaptive selection can be made according to the actual application.

In some embodiments, the second insulating layer 104 covers the first end face. The second insulating layer 104 covers all of the first end face so that the second insulating layer 104 can separate the positive electrode sheet from the first end face completely. In addition, when the negative electrode sheet 1021 is cut, the first end face, which serves as the cutting surface of the negative electrode sheet 1021, has burrs; when the second insulating layer 104 is provided, the second insulating layer 104 covers the burrs, which can prevent the burrs on the cutting surface from piercing the separator, thereby enhancing the stability of the cylindrical battery 10.

In some embodiments, the second insulating layer 104 has a dimension $L_2$ in the thickness direction of the negative electrode sheet 1021, the thickness of the negative electrode sheet 1021 is D, and $L_2$ and D satisfy $D \leq L_2 \leq 50$ mm. The second insulating layer 104 has a dimension $d_0$ in the length direction of the negative electrode sheet 1021, the dimension $d_0$ satisfying $0.001 \text{ mm} \leq d_0 \leq 10 \text{ mm}$.

When $L_2$ is smaller than the thickness D of the negative electrode sheet 1021, the second insulating layer 104 cannot cover all of the first end face. When $L_2$ is larger than 50 mm, it is unfavorable to the winding of the negative electrode sheet 1021, and it also tends to lead to the detachment of the second insulating layer 104 from the first end face. When $d_0$ is smaller than 0.001 mm, the deformation of the first end face when the negative electrode sheet 1021 is wound leads to the breakage of the second insulating layer 104; when the negative electrode sheet 1021 expands and extends, the active substance of the negative electrode sheet 1021 extends from the broken part and punctures the separator. When $d_0$ is greater than 10 mm, the protective layer is too thick, and the end of the negative electrode sheet protrudes too much, thereby affecting the size of the gap in the battery receiving cavity after assembly, which then results in a too small gap.

For example, $D \leq L_2 \leq 30$ mm and $0.01 \text{ mm} \leq d_0 \leq 1 \text{ mm}$.

In some embodiments, the positive electrode tab 1024 and the negative electrode tab 1022 are kneaded flat tabs. The kneaded flat tabs can effectively reduce the space occupation ratio of electrode tabs, thereby increasing the energy density of the battery. However, when the tabs are kneaded flat, the positive electrode tab may be moved closer to an end of the negative electrode sheet away from the negative electrode tab; in this case, when the negative electrode sheet expands and extends, the edge of the material area on the side of the negative electrode sheet 1021 away from the negative electrode tab 1022 punctures the separator, and therefore contacts the positive electrode tab 1024 more easily. In the embodiments, the first insulating layer is provided on the edge of the material area on the side of the negative electrode sheet 1021 away from the negative electrode tab 1022, which can greatly improve the stability of the cylindrical battery having the kneaded flat tabs.

In the embodiments of the present disclosure, the first insulating layer is provided on the edge of the material area on the side of the negative electrode sheet away from the negative electrode tab. In this manner, when the material area on the side of the negative electrode sheet away from the negative electrode tab punctures the separator and extends toward the positive electrode tab, the first insulating layer can separate the material area, which is on the side of the negative electrode sheet away from the negative electrode tab, from the positive electrode tab, thereby avoiding a short circuit caused by contact between the material area on the side of the negative electrode sheet away from the negative electrode tab and the positive electrode tab after the separator is punctured.

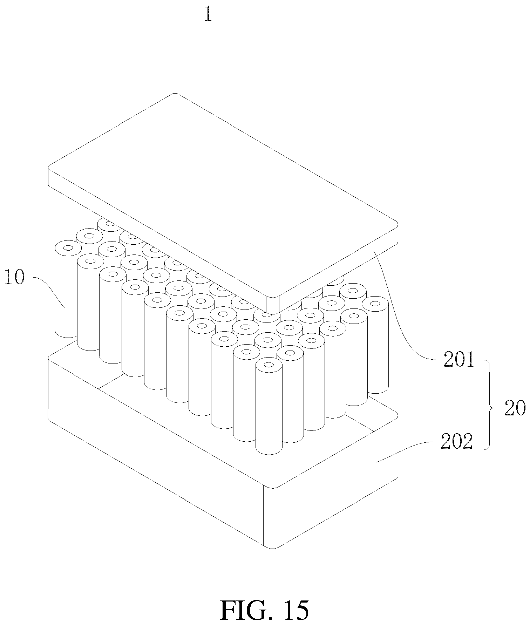

As shown in FIG. 15, FIG. 15 is a diagram showing the structure of a battery pack 1 provided by some embodiments of the present disclosure. Embodiments of the present disclosure also provide a battery pack 1. The battery pack 1 includes multiple cylindrical batteries 10, the cylindrical batteries 10 being connected in series or in parallel. The battery pack 1 further includes a case 20, the case 20 including a case cover 201 and a case body 202. The case cover 201 is capped to the case body 202 to form a closed cylindrical battery mounting cavity. The cylindrical batteries 10 are provided in the cylindrical battery mounting cavity.

**Claims**

1. A cylindrical battery, **characterized by** comprising:

   a housing (101) having a receiving cavity (1014);
   an electrode assembly (102) disposed within the receiving cavity (1014), wherein the electrode assembly (102) comprises a positive electrode sheet, a separator, and a negative electrode sheet (1021) which are stacked and wound, and a positive electrode tab (1024) of the positive electrode sheet and a negative electrode tab (1022) of the negative electrode sheet (1021) are disposed at two ends of the electrode assembly (102), respectively; and
   a first insulating layer (103) provided on a surface of the negative electrode sheet (1021) toward the separator and disposed at an end, away from the negative electrode tab (1022), of the surface.

2. The cylindrical battery according to claim 1, wherein the first insulating layer (103) has a dimension d in a thickness direction of the negative electrode sheet (1021), the dimension d satisfying

$$\mathrm{d} \leq \frac{\frac{S}{\pi} - 2r - (2n-1)\mathrm{n}\mathrm{D}}{n(n+1)} - a - 2b;$$

   wherein S is a length (mm) of the negative electrode sheet (1021);
   $r$ is a radius (mm) of a winding needle used for winding to form the electrode assembly (102); $a$ is a thickness (mm) of the positive electrode sheet;
   $b$ is a thickness (mm) of the separator;
   $D$ is a thickness (mm) of the negative electrode sheet (1021); and
   $n$ is a number of turns that the negative electrode sheet (1021) is wound.

3. The cylindrical battery according to claim 2, wherein the dimension d of the first insulating layer (103) in the thickness direction of the negative electrode sheet (1021) further satisfies

$$90\% \leq \frac{\pi\left[r + n(d+a+2b) + \frac{2n-1}{2}\mathrm{D}\right]^2}{\pi\mathrm{R}^2} \leq 98\%;$$

   wherein A is a radius (mm) of the housing (101).

4. The cylindrical battery according to claim 1, wherein the first insulating layer (103) comprises a plurality of first sub-insulating layers (1031), the plurality of first sub-insulating layers (1031) are provided on a same side of the negative electrode sheet (1021), and the plurality of first sub-insulating layers (1031) are stacked sequentially along a thickness direction of the negative electrode sheet (1021).

5. The cylindrical battery according to any one of claims 1 to 3, wherein the first insulating layer (103) comprises a plurality of first sub-insulating layers (1031);

   the negative electrode sheet (1021) has a first side and a second side which are opposite each other, part of the plurality of first sub-insulating layers (1031) are provided on the first side, and the remaining of the plurality of first sub-insulating layers (1031) are provided on the second side; and

the part of first sub-insulating layers (1031) or the remaining of first sub-insulating layers (1031) are sequentially stacked along a thickness direction of the negative electrode sheet (1021).

6. The cylindrical battery according to claim 4 or 5, wherein from one side of the negative electrode sheet (1021) to the other side of the negative electrode sheet (1021), dimensions of the plurality of first sub-insulating layers (1031) in the thickness direction of the negative electrode sheet (1021) are di, $d_2$, ..., di, the dimensions satisfying $0.15 < d_1 : d_i \leq 1$, wherein i is a natural number and $i \geq 2$.

7. The cylindrical battery according to any one of claims 1 to 6, wherein an end face of the negative electrode sheet (1021) in a length direction of the negative electrode sheet (1021) is a first end face, the first end face being disposed at an outer periphery of the electrode assembly (102), and a second insulating layer (104) is provided on the first end face.

8. The cylindrical battery according to claim 7, wherein the second insulating layer (104) covers the first end face.

9. The cylindrical battery according to claim 7 or 8, wherein the second insulating layer (104) has a dimension $L_2$ in a thickness direction of the negative electrode sheet (1021), a thickness of the negative electrode sheet (1021) is D, and $L_2$ and D satisfy $D \leq L_2 \leq 50$ mm; and

the second insulating layer (104) has a dimension $d_0$ in the length direction of the negative electrode sheet (1021), the dimension $d_0$ satisfying $0.001$ mm $\leq d_0 \leq 10$ mm.

10. The cylindrical battery according to any one of claims 1 to 9, wherein the positive electrode tab (1024) and the negative electrode tab (1022) are kneaded flat tab.

11. A battery pack, **characterized by** comprising a plurality of cylindrical batteries (10) according to any one of claims 1 to 10, the plurality of cylindrical batteries (10) being connected in series or in parallel.

10

1011

1014

1012

1013

1024

102

1022

1011
1012  }101
1013

FIG. 1

FIG. 2

FIG. 3

<u>1021</u>

103

1023

1022

1023

FIG. 4

FIG. 5

1021

1031

1031

1031

1031

103

$d_i...d_2\ d_1$

D

1022    1023    1023

FIG. 6

<u>1021</u>

FIG. 7

FIG. 8

FIG. 9

1021

1031 ⎫
1031 ⎬ 103

1031    1022    1023    1023

FIG. 10

FIG. 11

1021

1031

1031

1023

1031

1031

1022

1023

FIG. 12

FIG. 13

$\underline{1021}$

$d_0$

1031

1023

$L_2$

104    1031    1022

FIG. 14

FIG. 15

Europäisches
Patentamt

European
Patent Office

Office européen
des brevets

# EUROPEAN SEARCH REPORT

Application Number

EP 24 20 0319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 219382 A (TOSHIBA CORP) 22 December 2016 (2016-12-22) | 1-3 | INV. H01M4/36 |
| A | * paragraphs [0025], [0060]; figure 6 * ----- | 4-11 | H01M4/62 H01M10/04 |
| A | CN 115 911 256 A (XIAMEN XINNENGDA TECH CO LTD) 4 April 2023 (2023-04-04) * the whole document * ----- | 1-11 | ADD. H01M10/0587 |
| A | WO 2023/013933 A1 (LG ENERGY SOLUTION LTD [KR]) 9 February 2023 (2023-02-09) * the whole document * ----- | 1-11 | |
| A | WO 2023/085893 A1 (LG ENERGY SOLUTION LTD [KR]) 19 May 2023 (2023-05-19) * the whole document * ----- | 1-11 | |

**TECHNICAL FIELDS SEARCHED (IPC)**

H01M

The present search report has been drawn up for all claims

| Place of search | Date of completion of the search | Examiner |
|---|---|---|
| Munich | 7 February 2025 | Möller, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 525 085 A1**

## ANNEX TO THE EUROPEAN SEARCH REPORT
## ON EUROPEAN PATENT APPLICATION NO.

EP 24 20 0319

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | Publication date |
|---|---|---|---|
| JP 2016219382 A | 22-12-2016 | JP 6602050 B2 | 06-11-2019 |
| | | JP 2016219382 A | 22-12-2016 |
| CN 115911256 A | 04-04-2023 | CN 115911256 A | 04-04-2023 |
| | | WO 2024094210 A1 | 10-05-2024 |
| WO 2023013933 A1 | 09-02-2023 | CN 115706267 A | 17-02-2023 |
| | | CN 219106242 U | 30-05-2023 |
| | | EP 4329026 A1 | 28-02-2024 |
| | | JP 2024514896 A | 03-04-2024 |
| | | US 2024266700 A1 | 08-08-2024 |
| | | WO 2023013933 A1 | 09-02-2023 |
| WO 2023085893 A1 | 19-05-2023 | CA 3238237 A1 | 19-05-2023 |
| | | CN 117981158 A | 03-05-2024 |
| | | EP 4391194 A1 | 26-06-2024 |
| | | JP 2024543432 A | 21-11-2024 |
| | | KR 20230070167 A | 22-05-2023 |
| | | US 2024396168 A1 | 28-11-2024 |
| | | WO 2023085893 A1 | 19-05-2023 |

EPO FORM P0459

For more details about this annex : see Official Journal of the European Patent Office, No. 12/82